# EUROPEAN PATENT APPLICATION

(11) **EP 3 562 161 A1**
(43) Date of publication of application: **30.10.2019**
(21) Application number: 19180099.4
(22) Date of filing: 03.10.2013
(51) Int. Cl.: H04N 19/70, H04N 19/46

(54) **INDICATION OF VIDEO PROPERTIES**

(30) Priority: 04.10.2012 US 201261709922 P; 02.10.2013 US 201314044339
(62) Divisional of application: 13782877.8
(71) Applicant: QUALCOMM Incorporated, San Diego, CA 92121-1714 (US)
(72) Inventor: CHEN, Ying, San Diego, CA California 92121-1714 (US); ZHOU, Bo, San Diego, CA California 92121-1714 (US)
(74) Representative: Ainscow, Georgina Frances

(57) **Abstract**

A method of decoding video data, comprising decoding a plurality of coding tool enable bits of a parameter set syntax structure for a coded video sequence, determining whether coding tool enable bits of the plurality of coding tool enable bits indicate that corresponding coding tools are enabled, and decoding the coded video sequence using the one or more coding tools that the plurality of coding tool enable bits indicate are enabled, without using the coding tools that the plurality of coding tool enable bits indicate are not enabled. Each of the coding tool enable bits correspond to at least one coding tool of a plurality of coding tools such that each of the coding tool enable bits corresponds to one or more different coding tools of the plurality of coding tools, wherein the parameter set syntax structure further includes profile and level information for the coded video sequence, and wherein the plurality of coding tool enable bits indicate whether the corresponding coding tools are enabled for use by the video decoder in decoding the coded video sequence.

## Description

This Application claims priority to U.S. Provisional Application No. 61/709,922, filed on October 4, 2012, the entire contents of which are incorporated herein by reference.

### TECHNICAL FIELD

This disclosure relates to video coding.

### BACKGROUND

Digital video capabilities can be incorporated into a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. Digital video devices implement video coding techniques, such as those described in the standards defined by MPEG-2, MPEG-4, ITU-T H.263, ITU-T H.264/MPEG-4, Part 10, Advanced Video Coding (AVC), the High Efficiency Video Coding (HEVC) standard presently under development, and extensions of such standards. HEVC includes the specification of the field indication supplemental enhancement information (SEI) message, for indication of interlaced video, and the frame packing arrangement (FPA) SEI message, for indication of frame-packed stereoscopic 3D video. The video devices may transmit, receive, encode, decode, and/or store digital video information more efficiently by implementing such video coding techniques.

Video coding techniques include spatial (intra-picture) prediction and/or temporal (inter-picture) prediction to reduce or remove redundancy inherent in video sequences. For block-based video coding, a video slice (e.g., a video frame or a portion of a video frame) may be partitioned into video blocks, which may also be referred to as treeblocks, coding units (CUs) and/or coding nodes. Video blocks in an intra-coded (I) slice of a picture are encoded using spatial prediction with respect to reference samples in neighboring blocks in the same picture. Video blocks in an inter-coded (P or B) slice of a picture may use spatial prediction with respect to reference samples in neighboring blocks in the same picture or temporal prediction with respect to reference samples in other reference pictures. Pictures may be referred to as frames, and reference pictures may be referred to a reference frames.

Spatial or temporal prediction results in a predictive block for a block to be coded. Residual data represents pixel differences between the original block to be coded and the predictive block. An inter-coded block is encoded according to a motion vector that points to a block of reference samples forming the predictive block, and the residual data indicating the difference between the coded block and the predictive block. An intra-coded block is encoded according to an intra-coding mode and the residual data. For further compression, the residual data may be transformed from the pixel domain to a transform domain, resulting in residual transform coefficients, which then may be quantized. The quantized transform coefficients, initially arranged in a two-dimensional array, may be scanned in order to produce a one-dimensional vector of transform coefficients, and entropy coding may be applied to achieve even more compression.

### SUMMARY

In general, this disclosure describes techniques for indicating the coded properties of a video sequence in a sequence parameter set (SPS). More specifically, the disclosure describes techniques for by reusing the profile, tier and level syntax structure presented in a sequence parameter set.

In one example, a method of decoding video data includes receiving, by a video decoder, a coded video sequence and decoding one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video decoder in decoding the coded video sequence.

In another example, a method of encoding video data includes determining a video sequence to be encoded and encoding, by a video encoder, the video sequence. The method further includes encoding one or more bits of a reserved bits syntax element for the encoded video sequence as one or more coding tool enable bits, wherein the reserved bit syntax element is part of a syntax structure that includes profile and level information, and wherein the one or more coding tool enable bits indicate whether one or more coding tools are enabled for use by the video encoder in encoding the video sequence.

In another example, a device includes a video coder configured to determine a video sequence to be coded, code the video sequence, and code one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video coder in coding the video sequence.

In another example, a device includes means for determining a video sequence to be coded and means for coding the video sequence. The device further includes means for coding one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video coder in coding the video sequence.

In another example, a computer-readable storage medium is encoded with instructions that, when executed, cause a processor to of a device for coding video data to determine a video sequence to be coded, code the video sequence, and code one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video coder in coding the video sequence.

In some examples, the syntax structure is a profile_tier_level syntax structure conforming to a high efficiency video coding (HEVC) standard. Further, in some examples, the reserved bits syntax element is a general_reserved_zero_16bits reserved bits syntax element of the profile_tier_level syntax structure.

In another example, the one or more coding tool enable bits are not included as other syntax elements outside the syntax structure in a parameter set, including video parameter set (VPS) and sequence parameter set (SPS) syntax information.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example video encoding and decoding system that may utilize techniques for indicating some coded properties, according to techniques described in this disclosure.
FIG. 2 is a block diagram illustrating an example video encoder that may implement the techniques described in this disclosure.
FIG. 3 is a block diagram illustrating an example video decoder that may implement the techniques described in this disclosure.
FIG. 4 is a flowchart illustrating an example method of decoding a video sequence, according to techniques described in this disclosure.
FIG. 5 is a flowchart illustrating an example method of encoding a video sequence, according to techniques described in this disclosure.

### DETAILED DESCRIPTION

In general, this disclosure describes techniques for indicating one or more coded properties in a sequence parameter set (SPS). More specifically, the techniques of this disclosure use the profile, tier, and level syntax structure to indicate coded properties for a video sequence. The profile_tier_level syntax structure may be signaled in the SPS or video parameter set (VPS) in video coding according to a video standard, such as the High Efficiency Video Coding (HEVC) standard. The techniques described herein improve lightweight access to video properties for transport standards designed to understand the profile_tier_level syntax structure.

Some standards, such as HEVC, define a profile_tier_level syntax structure which includes syntax elements used in interpreting and/or coding video data associated with the syntax structure. Profiles, tiers, and levels specify conformance points for implementing the standard, such as HEVC, in an interoperable way across various applications with similar functional requirements. Additionally, syntax elements or flags indicating other video properties used for coding the video data may be included in syntax structures outside the profile tier level syntax structure, such as elsewhere in the SPS or a video parameter set (VPS). These syntax elements or flags may indicate whether various coding tools are enabled for the video data.

Transport standards used for some video devices, including the international organization for standardization (ISO) base media file format, MPEG-2 systems, Dynamic Adaptive Streaming over Hypertext Transfer Protocol (HTTP) (DASH), and real-time transport protocol (RTP), for example, may be designed to understand at least the first several bits of the profile_tier_level syntax structure. However, besides the profile_tier_level syntax structure, other additional information included in the SPS or VPS is less accessible. Thus, some techniques of this disclosure use one or more bits of the profile tier level syntax structure to provide flags to indicate whether various coding tools are enabled that would otherwise be included in the less accessible portions of the SPS or VPS. In some examples, one or more coding enable tool bits may be coded in a reserve bit syntax element that is part of, or consecutive with, a syntax structure that includes profile and level information. The syntax structure may be a profile_tier_level syntax structure and may be located in a parameter set.

Drafts of HEVC, such as HEVC Working Draft 8 (referred to herein as "WD 8"), includes a general_reserved_zero_16bits syntax element that reserves bits for future purposes. Techniques in this disclosure use some of the reserved bits in the profile_tier_level syntax structure to provide flags to indicate whether various coding tools are enabled. Examples of coding tools include whether explicit weighted prediction (besides the default (1/2, 1/2) (1, 0) or (0, 1)) and/or tiles are enabled for a coded video sequence, bitstream, or elementary stream. Additional example coding tools that may be signaled include whether wavefront is enabled, whether temporal motion vector prediction (TMVP) is enabled, whether scaling list data is present, or whether the current bitstream is 8-bit. These techniques provide more differentiation between codecs within the given profile, tier, and level. In other words, within a given profile/tier/level, techniques of this disclosure can use one or more bits of the reserved bits as coding tool enable bits to indicate whether certain coding tools are enabled. In some examples, one or more flags, a general_no_weighted_prediction_flag flag and a general_no_tiles_flag flag, may also be included as part of the syntax element. Further, all of the above indications of coding tools can be independent of each other.

By including syntax elements for some coding tools in the profile tier level syntax structure, they do not have to be generally present in the SPS. Using these techniques, the syntax elements can be in the first few bytes of the profile_tier_level syntax structure. Therefore, video devices that use a transport standard designed to understand at least the first several bits of the profile_tier_level syntax structure may be able to determine whether some coding tools are enabled for the associated video data.

The profile_tier_level syntax structure may be in the SPS, or alternatively, in the VPS. A SPS is required for each layer of the video data, resulting in multiple SPSs being coded and transmitted. In contrast, the VPS is sent only once for all layers of the video data. Thus, including the profile tier level syntax structure in the VPS instead of in the SPS reduces the overall number of bits sent.

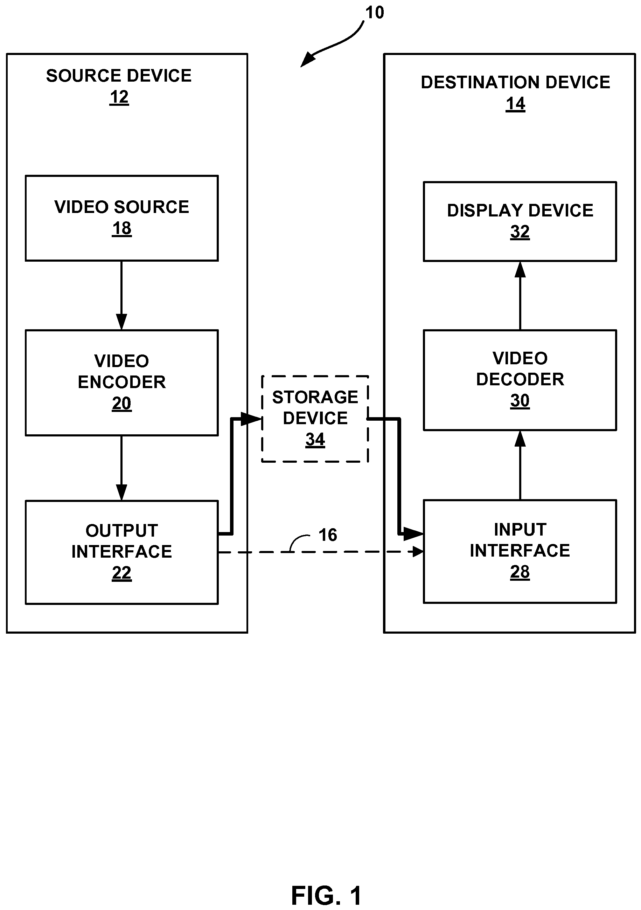

FIG. 1 is a block diagram illustrating an example video encoding and decoding system 10 that may utilize techniques for indicating some coded properties, according to techniques described in this disclosure. As shown in FIG. 1, system 10 includes a source device 12 that provides encoded video data to be decoded at a later time by a destination device 14. In particular, source device 12 provides the video data to destination device 14 via a computer-readable medium 16, which may be a storage device 34. Source device 12 and destination device 14 may comprise any of a wide range of devices, including digital televisions, digital direct broadcast systems, wireless broadcast systems, personal digital assistants (PDAs), laptop or desktop computers, tablet computers, e-book readers, digital cameras, digital recording devices, digital media players, video gaming devices, video game consoles, cellular or satellite radio telephones, so-called "smart phones," video teleconferencing devices, video streaming devices, and the like. In some cases, source device 12 and destination device 14 may be equipped for wireless communication.

Digital video devices, such as source device 12 and destination device 14, implement video coding techniques, such as those described in the standards defined by MPEG-2, MPEG-4, ITU-T H.263, ITU-T H.264/MPEG-4, Part 10, Advanced Video Coding (AVC), the HEVC standard, and extensions of such standards. The video devices may transmit, receive, encode, decode, and/or store digital video information more efficiently by implementing such video coding techniques.

Destination device 14 may receive the encoded video data to be decoded via computer-readable medium 16. Computer-readable medium 16 may comprise any type of medium or device capable of moving the encoded video data from source device 12 to destination device 14. In one example, computer-readable medium 16 may comprise a communication medium to enable source device 12 to transmit encoded video data directly to destination device 14 in real-time. The encoded video data may be modulated according to a communication standard, such as a wireless communication protocol, and transmitted to destination device 14. The communication medium may comprise any wireless or wired communication medium, such as a radio frequency (RF) spectrum or one or more physical transmission lines. The communication medium may form part of a packet-based network, such as a local area network, a wide-area network, or a global network such as the Internet. The communication medium may include routers, switches, base stations, or any other equipment that may be useful to facilitate communication from source device 12 to destination device 14.

Alternatively, encoded data may be output from output interface 22 to storage device 34. Similarly, encoded data may be accessed from storage device 34 by input interface. Storage device 34 may include any of a variety of distributed or locally accessed data storage media such as a hard drive, Blu-ray discs, DVDs, CD-ROMs, flash memory, volatile or non-volatile memory, or any other suitable digital storage media for storing encoded video data. In a further example, storage device 34 may correspond to a file server or another intermediate storage device that may hold the encoded video generated by source device 12. Destination device 14 may access stored video data from storage device 34 via streaming or download. The file server may be any type of server capable of storing encoded video data and transmitting that encoded video data to the destination device 14. Example file servers include a web server (e.g., for a website), an FTP server, network attached storage (NAS) devices, or a local disk drive. Destination device 14 may access the encoded video data through any standard data connection, including an Internet connection. This may include a wireless channel (e.g., a Wi-Fi connection), a wired connection (e.g., DSL, cable modem, etc.), or a combination of both that is suitable for accessing encoded video data stored on a file server. The transmission of encoded video data from storage device 34 may be a streaming transmission, a download transmission, or a combination of both.

The techniques of this disclosure are not necessarily limited to wireless applications or settings. The techniques may be applied to video coding in support of any of a variety of multimedia applications, such as over-the-air television broadcasts, cable television transmissions, satellite television transmissions, Internet streaming video transmissions, such as dynamic adaptive streaming over HTTP (DASH), digital video that is encoded onto a data storage medium, decoding of digital video stored on a data storage medium, or other applications.

Source device 12 and destination device 14 may be configured to use a transport standard, including the international organization for standardization (ISO) base media file format, MPEG-2 systems, DASH, and real-time transport protocol (RTP), that may, for example, be designed to interpret and understand codes or syntax elements embedded in at least the first several bits of the profile_tier_level syntax structure. However, other additional information in a sequence parameter set or video parameter set are less accessible to some devices. Thus some HEVC designs do not support lightweight access to the video properties.

In the example of FIG. 1, source device 12 includes video source 18, video encoder 20, and output interface 22. Destination device 14 includes input interface 28, video decoder 30, and display device 32. In accordance with this disclosure, video encoder 20 of source device 12 may be configured to apply the techniques for indicating the coded properties at the sequence parameter set by reusing bits in the profile, tier, and level syntax structure. Accordingly, instead of, or in addition to, using syntax elements and/or syntax structures presented elsewhere in an SPS or VPS to indicate video coding properties, one or more of the bits, e.g., in general_reserved_zero_16bits, of the profile, tier, and level syntax structure can be used to indicate one or more of the video coding properties, as described in this disclosure.

In various examples, a source device and a destination device may include other components or arrangements. For example, source device 12 may receive video data from an external video source 18, such as an external camera. Likewise, destination device 14 may interface with an external display device, rather than including an integrated display device.

The illustrated system 10 of FIG. 1 is merely one example. Techniques for indicating the video coding properties at the sequence parameter set by reusing the profile, tier, and level syntax structure may be performed by any digital video encoding and/or decoding device. Although generally the techniques of this disclosure are performed by a video encoding device, the techniques may also be performed by a video encoder/decoder, typically referred to as a "CODEC." Moreover, the techniques of this disclosure may also be performed by a video preprocessor. Source device 12 and destination device 14 are merely examples of such coding devices in which source device 12 generates coded video data for transmission to destination device 14. In some examples, devices 12, 14 may operate in a substantially symmetrical manner such that each of devices 12, 14 include video encoding and decoding components. Hence, system 10 may support one-way or two-way video transmission between video devices 12, 14, e.g., for video streaming, video playback, video broadcasting, or video telephony.

Video source 18 of source device 12 may include a video capture device, such as a video camera, a video archive containing previously captured video, and/or a video feed interface to receive video from a video content provider. As a further alternative, video source 18 may generate computer graphics-based data as the source video, or a combination of live video, archived video, and computer-generated video. In some cases, if video source 18 is a video camera, source device 12 and destination device 14 may form so-called camera phones or video phones. As mentioned above, however, the techniques described in this disclosure may be applicable to video coding in general, and may be applied to wireless and/or wired applications. In each case, the captured, pre-captured, or computer-generated video may be encoded by video encoder 20. The encoded video information may then be output by output interface 22 onto a computer-readable medium 16 or storage device 34.

Computer-readable medium 16 may include transient media, such as a wireless broadcast or wired network transmission, or storage media (that is, non-transitory storage media), such as a hard disk, flash drive, compact disc, digital video disc, Blu-ray disc, or other computer-readable media. In some examples, a network server may receive encoded video data from source device 12 and provide the encoded video data to destination device 14, e.g., via network transmission. Similarly, a computing device of a medium production facility, such as a disc stamping facility, may receive encoded video data from source device 12 and produce a disc containing the encoded video data. Therefore, computer-readable medium 16 may be understood to include one or more computer-readable media of various forms, in various examples.

Input interface 28 of destination device 14 receives information from computer-readable medium 16. The information of computer-readable medium 16 may include syntax information defined by video encoder 20, which is also used by video decoder 30, that includes syntax elements that describe characteristics and/or processing of blocks and other coded units, e.g., GOPs. Display device 32 displays the decoded video data to a user, and may comprise any of a variety of display devices such as a cathode ray tube (CRT), a liquid crystal display (LCD), a plasma display, an organic light emitting diode (OLED) display, or another type of display device.

Video encoder 20 and video decoder 30 may operate according to a video coding standard, such as the High Efficiency Video Coding (HEVC) standard presently under development, and may conform to the HEVC Test Model (HM). HEVC includes the specification of the field indication SEI message, for indication of interlaced video, and the frame packing arrangement (FPA) SEI message, for indication of frame-packed stereoscopic 3D video. HEVC is currently being developed by the Joint Collaboration Team on Video Coding (JCT-VC) of ITU-T Video Coding Experts Group (VCEG) and ISO/IEC Motion Picture Experts Group (MPEG). A recent Working Draft (WD) of HEVC is Working Draft 8 (referred to hereinafter as "HEVC WD8"). Bross et al., High Efficiency Video Coding (HEVC) Text Specification Draft 8, July 2012, Stockholm, available as of September 12, 2013 from http://phenix.int-evry.fr/jct/doc_end_user/documents/10_Stockholm/wg11/JCTVC-J1003-v8.zip. Although the techniques described in this disclosure are described with respect to the HEVC standard, aspects of this disclosure are not so limited and can be extended to other video coding standards, as well as proprietary video coding techniques.

Alternatively, video encoder 20 and video decoder 30 may operate according to other proprietary or industry standards. An example of another standard is the ITU-T H.264 standard (also known as ISO/IEC MPEG-4 AVC), alternatively referred to as MPEG-4, Part 10, Advanced Video Coding (AVC), or extensions of such standards. Other video coding standards that video encoder 20 and video decoder 30 may operate according to include MPEG-2 systems, DASH, and RPT. Other examples of video coding standards that video encoder 20 and video decoder 30 may operate according to include ITU-T H.261, ISO/IEC MPEG-1 Visual, ITU-T H.262 or ISO/IEC MPEG-2 Visual, ITU-T H.263, ISO/IEC MPEG-4 Visual and ITU-T H.264, including its Scalable Video Coding (SVC) and Multiview Video Coding (MVC) extensions. In some examples, video encoder 20 and video decoder 30 may be configured to operate according to two or more standards. The techniques of this disclosure, however, are not limited to any particular coding standard, but may be particularly useful in an HEVC video coding process.

In some aspects, video encoder 20 and video decoder 30 may each be integrated with an audio encoder and decoder, and may include appropriate MUX-DEMUX units, or other hardware and software, to handle encoding of both audio and video in a common data stream or separate data streams. If applicable, MUX-DEMUX units may conform to the ITU H.223 multiplexer protocol, or other protocols such as the user datagram protocol (UDP).

The ITU-T H.264/MPEG-4 (AVC) standard was formulated by the ITU-T Video Coding Experts Group (VCEG) together with the ISO/IEC Moving Picture Experts Group (MPEG) as the product of a collective partnership known as the Joint Video Team (JVT). In some aspects, the techniques described in this disclosure may be applied to devices that generally conform to the H.264 standard. The H.264 standard is described in ITU-T Recommendation H.264, Advanced Video Coding for generic audiovisual services, by the ITU-T Study Group, and dated March, 2005, which may be referred to herein as the H.264 standard or H.264 specification, or the H.264/AVC standard or specification. The Joint Video Team (JVT) continues to work on extensions to H.264/MPEG-4 AVC.

Video encoder 20 and video decoder 30 each may be implemented as any of a variety of suitable encoder circuitry, such as one or more microprocessors, digital signal processors (DSPs), application specific integrated circuits (ASICs), field programmable gate arrays (FPGAs), discrete logic, software, hardware, firmware or any combinations thereof. When the techniques are implemented partially in software, a device may store instructions for the software in a suitable, non-transitory computer-readable medium and execute the instructions in hardware using one or more processors to perform the techniques of this disclosure. Each of video encoder 20 and video decoder 30 may be included in one or more encoders or decoders, either of which may be integrated as part of a combined encoder/decoder (CODEC) in a respective device.

The JCT-VC is working on further development of the HEVC standard. The HEVC standardization efforts are based on an evolving model of a video coding device referred to as the HEVC Test Model (HM). The HM presumes several additional capabilities of video coding devices relative to existing devices according to, e.g., ITU-T H.264/AVC. For example, whereas H.264 provides nine intra-prediction encoding modes, the HM may provide as many as thirty-three intra-prediction encoding modes.

In general, the working model of the HM describes that a video frame or picture may be divided into a sequence of treeblocks or largest coding units (LCU) that include both luma and chroma samples. The upcoming HEVC standard also refers to LCUs as "coding tree units." Syntax data within a bitstream may define a size for the LCU, which is a largest coding unit in terms of the number of pixels. A slice includes a number of consecutive treeblocks in coding order. A video frame or picture may be partitioned into one or more slices. Each treeblock may be split into coding units (CUs) according to a quadtree. In general, a quadtree data structure includes one node per CU, with a root node corresponding to the treeblock. If a CU is split into four sub-CUs, the node corresponding to the CU includes four leaf nodes, each of which corresponds to one of the sub-CUs.

Each node of the quadtree data structure may provide syntax data for the corresponding CU. For example, a node in the quadtree may include a split flag, indicating whether the CU corresponding to the node is split into sub-CUs. Syntax elements for a CU may be defined recursively, and may depend on whether the CU is split into sub-CUs. If a CU is not split further, it is referred as a leaf-CU. In this disclosure, four sub-CUs of a leaf-CU will also be referred to as leaf-CUs even if there is no explicit splitting of the original leaf-CU. For example, if a CU at 16x16 size is not split further, the four 8x8 sub-CUs will also be referred to as leaf-CUs although the 16x16 CU was never split.

A CU has a similar purpose as a macroblock of the H.264 standard, except that a CU does not have a size distinction. For example, a treeblock may be split into four child nodes (also referred to as sub-CUs), and each child node may in turn be a parent node and be split into another four child nodes. A final, unsplit child node, referred to as a leaf node of the quadtree, comprises a coding node, also referred to as a leaf-CU. Syntax data associated with a coded bitstream may define a maximum number of times a treeblock may be split, referred to as a maximum CU depth, and may also define a minimum size of the coding nodes. Accordingly, a bitstream may also define a smallest coding unit (SCU). This disclosure uses the term "block" to refer to any of a CU, PU, or TU, in the context of HEVC, or similar data structures in the context of other standards (e.g., macroblocks and sub-blocks thereof in H.264/AVC).

A CU includes a coding node and prediction units (PUs) and transform units (TUs) associated with the coding node. A size of the CU corresponds to a size of the coding node and must be square in shape. The size of the CU may range from 8x8 pixels up to the size of the treeblock with a maximum of 64x64 pixels or greater. Each CU may contain one or more PUs and one or more TUs. Syntax data associated with a CU may describe, for example, partitioning of the CU into one or more PUs. Partitioning modes may differ between whether the CU is skip or direct mode encoded, intra-prediction mode encoded, or inter-prediction mode encoded. PUs may be partitioned to be non-square in shape. Syntax data associated with a CU may also describe, for example, partitioning of the CU into one or more TUs according to a quadtree. A TU can be square or non-square (e.g., rectangular) in shape.

The HEVC standard allows for transformations according to TUs, which may be different for different CUs. The TUs are typically sized based on the size of PUs within a given CU defined for a partitioned LCU, although this may not always be the case. The TUs are typically the same size or smaller than the PUs. In some examples, residual samples corresponding to a CU may be subdivided into smaller units using a quadtree structure known as "residual quad tree" (RQT). The leaf nodes of the RQT may be referred to as transform units (TUs). Pixel difference values associated with the TUs may be transformed to produce transform coefficients, which may be quantized.

A leaf-CU may include one or more prediction units (PUs). In general, a PU represents a spatial area corresponding to all or a portion of the corresponding CU, and may include data for retrieving a reference sample for the PU. Moreover, a PU includes data related to prediction. For example, when the PU is intra-mode encoded, data for the PU may be included in a residual quadtree (RQT), which may include data describing an intra-prediction mode for a TU corresponding to the PU. As another example, when the PU is inter-mode encoded, the PU may include data defining one or more motion vectors for the PU. The data defining the motion vector for a PU may describe, for example, a horizontal component of the motion vector, a vertical component of the motion vector, a resolution for the motion vector (e.g., one-quarter pixel precision or one-eighth pixel precision), a reference picture to which the motion vector points, and/or a reference picture list (e.g., List 0, List 1, or List C) for the motion vector.

A leaf-CU having one or more PUs may also include one or more transform units (TUs). The transform units may be specified using an RQT (also referred to as a TU quadtree structure), as discussed above. For example, a split flag may indicate whether a leaf-CU is split into four transform units. Then, each transform unit may be split further into further sub-TUs. When a TU is not split further, it may be referred to as a leaf-TU. Generally, for intra coding, all the leaf-TUs belonging to a leaf-CU share the same intra prediction mode. That is, the same intra-prediction mode is generally applied to calculate predicted values for all TUs of a leaf-CU. For intra coding, a video encoder may calculate a residual value for each leaf-TU using the intra prediction mode, as a difference between the portion of the CU corresponding to the TU and the original block. A TU is not necessarily limited to the size of a PU. Thus, TUs may be larger or smaller than a PU. For intra coding, a PU may be collocated with a corresponding leaf-TU for the same CU. In some examples, the maximum size of a leaf-TU may correspond to the size of the corresponding leaf-CU.

Moreover, TUs of leaf-CUs may also be associated with respective quadtree data structures, referred to as residual quadtrees (RQTs). That is, a leaf-CU may include a quadtree indicating how the leaf-CU is partitioned into TUs. The root node of a TU quadtree generally corresponds to a leaf-CU, while the root node of a CU quadtree generally corresponds to a treeblock (or LCU). TUs of the RQT that are not split are referred to as leaf-TUs. In general, this disclosure uses the terms CU and TU to refer to leaf-CU and leaf-TU, respectively, unless noted otherwise.

A video sequence typically includes a series of video frames or pictures. A group of pictures (GOP) generally comprises a series of one or more of the video pictures. A GOP may include syntax data in a header of the GOP, a header of one or more of the pictures, or elsewhere, that describes a number of pictures included in the GOP. Each slice of a picture may include slice syntax data that describes an encoding mode for the respective slice. Video encoder 20 typically operates on video blocks within individual video slices in order to encode the video data. A video block may correspond to a coding node within a CU. The video blocks may have fixed or varying sizes, and may differ in size according to a specified coding standard.

As an example, the HM supports prediction in various PU sizes. Assuming that the size of a particular CU is 2Nx2N, the HM supports intra-prediction in PU sizes of 2Nx2N or NxN, and inter-prediction in symmetric PU sizes of 2Nx2N, 2NxN, Nx2N, or NxN. The HM also supports asymmetric partitioning for inter-prediction in PU sizes of 2NxnU, 2NxnD, nLx2N, and nRx2N. In asymmetric partitioning, one direction of a CU is not partitioned, while the other direction is partitioned into 25% and 75%. The portion of the CU corresponding to the 25% partition is indicated by an "n" followed by an indication of "Up", "Down," "Left," or "Right." Thus, for example, "2NxnU" refers to a 2Nx2N CU that is partitioned horizontally with a 2Nx0.5N PU on top and a 2Nx1.5N PU on bottom.

In this disclosure, "NxN" and "N by N" may be used interchangeably to refer to the pixel dimensions of a video block in terms of vertical and horizontal dimensions, e.g., 16x16 pixels or 16 by 16 pixels. In general, a 16x16 block will have 16 pixels in a vertical direction (y = 16) and 16 pixels in a horizontal direction (x = 16). Likewise, an NxN block generally has N pixels in a vertical direction and N pixels in a horizontal direction, where N represents a nonnegative integer value. The pixels in a block may be arranged in rows and columns. Moreover, blocks need not necessarily have the same number of pixels in the horizontal direction as in the vertical direction. For example, blocks may comprise NxM pixels, where M is not necessarily equal to N.

Following intra-predictive or inter-predictive coding using the PUs of a CU, video encoder 20 may calculate residual data for the TUs of the CU. The PUs may comprise syntax data describing a method or mode of generating predictive pixel data in the spatial domain (also referred to as the pixel domain) and the TUs may comprise coefficients in the transform domain following application of a transform, e.g., a discrete cosine transform (DCT), an integer transform, a wavelet transform, or a conceptually similar transform to residual video data. The residual data may correspond to pixel differences between pixels of the unencoded picture and prediction values corresponding to the PUs. Video encoder 20 may form the TUs including the residual data for the CU, and then transform the TUs to produce transform coefficients for the CU.

Following any transforms to produce transform coefficients, video encoder 20 may perform quantization of the transform coefficients. Quantization generally refers to a process in which transform coefficients are quantized to possibly reduce the amount of data used to represent the coefficients, providing further compression. The quantization process may reduce the bit depth associated with some or all of the coefficients. For example, an n-bit value may be rounded down to an m-bit value during quantization, where *n* is greater than *m.*

Following quantization, the video encoder may scan the transform coefficients, producing a one-dimensional vector from the two-dimensional matrix including the quantized transform coefficients. The scan may be designed to place higher energy (and therefore lower frequency) coefficients at the front of the array and to place lower energy (and therefore higher frequency) coefficients at the back of the array. In some examples, video encoder 20 may utilize a predefined scan order to scan the quantized transform coefficients to produce a serialized vector that can be entropy encoded. In other examples, video encoder 20 may perform an adaptive scan. After scanning the quantized transform coefficients to form a one-dimensional vector, video encoder 20 may entropy encode the one-dimensional vector, e.g., according to context-adaptive variable length coding (CAVLC), context-adaptive binary arithmetic coding (CABAC), syntax-based context-adaptive binary arithmetic coding (SBAC), Probability Interval Partitioning Entropy (PIPE) coding or another entropy encoding methodology. Video encoder 20 may also entropy encode syntax elements associated with the encoded video data for use by video decoder 30 in decoding the video data.

To perform CABAC, video encoder 20 may assign a context within a context model to a symbol to be transmitted. The context may relate to, for example, whether neighboring values of the symbol are non-zero or not. To perform CAVLC, video encoder 20 may select a variable length code for a symbol to be transmitted. Codewords in VLC may be constructed such that relatively shorter codes correspond to more probable symbols, while longer codes correspond to less probable symbols. In this way, the use of VLC may achieve a bit savings over, for example, using equal-length codewords for each symbol to be transmitted. The probability determination may be based on a context assigned to the symbol.

Video encoder 20 may further send syntax data, such as block-based syntax data, frame-based syntax data, and GOP-based syntax data, to video decoder 30, e.g., in a frame header, a block header, a slice header, or a GOP header. The GOP syntax data may describe a number of frames in the respective GOP, and the frame syntax data may indicate an encoding/prediction mode used to encode the corresponding frame.

Video encoder 20 and video decoder 30 each may be implemented as any of a variety of suitable encoder or decoder circuitry, as applicable, such as one or more microprocessors, digital signal processors (DSPs), application specific integrated circuits (ASICs), field programmable gate arrays (FPGAs), discrete logic circuitry, software, hardware, firmware or any combinations thereof. Each of video encoder 20 and video decoder 30 may be included in one or more encoders or decoders, either of which may be integrated as part of a combined video encoder/decoder (CODEC). A device including video encoder 20 and/or video decoder 30 may comprise an integrated circuit, a microprocessor, and/or a wireless communication device, such as a cellular telephone.

Some standards, such as HEVC, define a profile_tier_level syntax structure. Profiles, tiers, and levels specify conformance points for implementing the standard, such as HEVC, in an interoperable way across various applications with similar functional requirements. A profile defines a set of coding tools or algorithms that can be used to generate conforming bitstreams. A level places constraints on certain parameters of the bitstream, for example, corresponding to decoder processing load and memory capabilities. Level restrictions are established in terms of maximum sample rate, maximum picture size, maximum bit rate, minimum compression ratio, and capacities of the decoded picture buffer (DPB) and the coded picture buffer (CPB). Some levels have two tiers specified, a Main Tier and a High Tier.

One or more of source device 12, destination device 14, and computer-readable medium 16 may implement one or more transport standards that are designed to understand at least the profile_tier_level syntax structure. Such transport standards may be, for example, ISO base media file format, MPEG-2 systems, DASH, and real-time transfer protocol (RTP). According to techniques described herein, video encoder 20 and may be configured to encode a video sequence and encode one or more bits of a reserved bits syntax element, e.g., such as one of the bits in general_reserved_zero_16bits for a profile_tier_level syntax structure for the coded video sequence indicate one or more of codec properties. In some aspects, these one or more bits may serve as one or more coding tool enable bits. The one or more coding tool enable bits indicate whether one or more coding tools are enabled for use by video encoder 20 and/or video decoder 30. Furthermore, video decoder 30 may be configured to decode one or more bits of a reserved bits syntax element, e.g., such as one of the bits in general_reserved_zero_16bits for a profile_tier_level syntax structure for the coded video sequence as one or more coding tool enable bits.

In some aspects, the one or more coding tool enable bits indicate whether one or more coding tools are enabled for use by video decoder 30. Using the one or more coding tools that are indicated by the one or more coding tool enable bits that are indicated as being enabled for use by video decoder 30, video decoder 30 may decode the encoded video sequence. That is, video decoder 30 may use the enabled coding tools for decoding the coded video data. In some examples, the one or more coding tool enable bits are coded as one or more bits of the general_reserved_zero_16bits reserved bits syntax element in the profile_tier_level syntax structure. The one or more coding tool enable bits may indicate one or more of the following codec properties: whether explicit weighted prediction (not default (1/2, 1/2) (1, 0) or (0, 1)) is enabled for the coded video sequence, bitstream, or elementary stream; whether tiles are enabled for the coded video sequence, bitstream, or elementary stream; whether wavefront processing is enabled for the coded video sequence, bitstream, or elementary stream; whether temporal motion vector prediction is enabled in the coded video sequence, bitstream or elementary stream; whether the scaling list data are present and used for the coded video sequence, bitstream or elementary stream; and whether the current bitstream is 8-bit or not. Indicating that the current bitstream is 8-bits allows video decoder 30 to determine that the bitstream has a depth of 8 bits, as opposed to other bit depths.

In an example where one or more coding tool enable bits indicate whether tiles are enabled for the coded video sequence, bitstream, or elementary stream, the one or more coding tool enable bits may further, or in the alternative, indicate whether tiles are independently decodable. Tiles are rectangular regions of a picture of video data that may aid a parallel processing capability of HEVC. A picture may be partitioned into tiles that are independently decodable regions that are encoded with some shared header information. In some examples, tiles can also be used for spatial random access to local regions of video pictures. One example tile configuration of a picture includes segmenting the picture into rectangular regions with approximately equal numbers of coding tree units in each tile.

In some examples, one or more coding tool enable bits indicate whether wavefront is enabled. As used herein, wavefront generally refers to wavefront parallel processing (WPP). When WPP is enabled, a slice of video data is divided into rows of coding tree units (CTUs). The first row may be processed in a typical manner, and the second row can be processed after only two CTUs have been processed in the first row, the third row can begin to be processed after only two CTUs have been processed in the second row, and so on. The context models of an entropy coder in each row may be inferred from those in the preceding row with a two-CTU processing lag. Wavefront parallel processing may provide a form of parallel processing that is relatively finer than tiles because wavefront parallel processing acts on a slice level while tiles act on a picture level.

According to techniques of this disclosure, one or more flags, a general_no_weighted_prediction_flag flag and a general_no_tiles_flag flag, may be included as part of the reserved bits syntax element. The general_no_weighted_prediction_flag flag equal to 1 indicates that in the coded video sequence, no picture is coded with weighted prediction and syntax elements weighted_pred_flag and weighted_bipred_flag, in picture parameter sets (PPS) shall be equal to 0. The flag general_no_weighted_prediction_flag equal to 0 indicates that in the coded video sequence, weighted prediction may be used. The flag general_no_tiles_flag equal to 1 indicates that one tile in each picture is used for each picture in the coded video sequence and syntax element tiles_enabled_flag, in PPSs shall be equal to 0. The flag general_no_tiles_flag equal to 0 indicates that there may be more than one tile in the pictures.

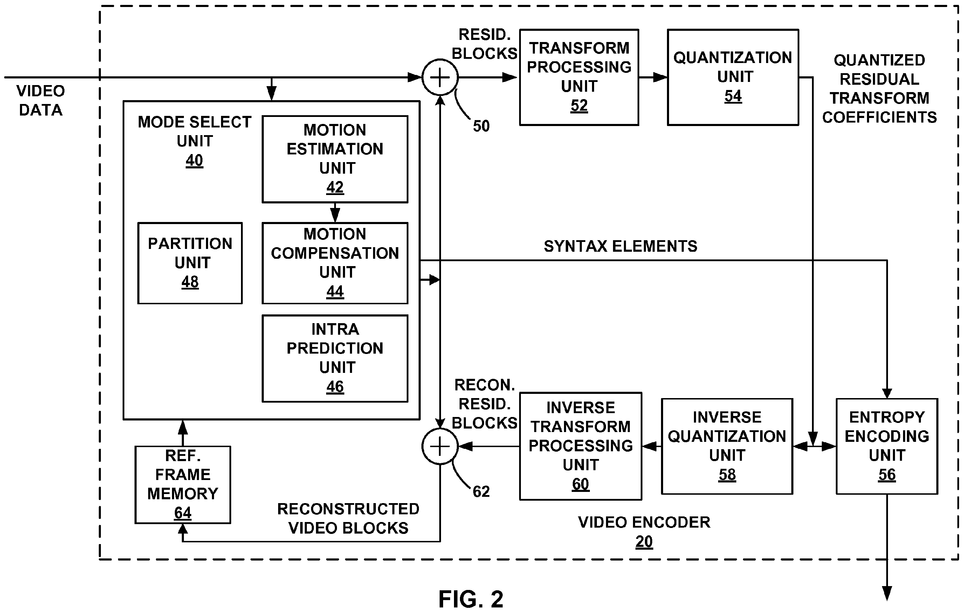

FIG. 2 is a block diagram illustrating an example of video encoder 20 that may implement techniques for indicating the coded properties at the sequence parameter set by using the profile, tier, and level syntax structure. Video encoder 20 may perform intra- and inter-coding of video blocks within video slices. Intra-coding relies on spatial prediction to reduce or remove spatial redundancy in video within a given video frame or picture. Inter-coding relies on temporal prediction to reduce or remove temporal redundancy in video within adjacent frames or pictures of a video sequence. Intra-mode (I mode) may refer to any of several spatial based coding modes. Inter-modes, such as uni-directional prediction (P mode) or bi-prediction (B mode), may refer to any of several temporal-based coding modes.

As shown in FIG. 2, video encoder 20 receives a current video block within a video frame to be encoded. In the example of FIG. 2, video encoder 20 includes mode select unit 40, reference frame memory 64, summer 50, transform processing unit 52, quantization unit 54, and entropy encoding unit 56. Mode select unit 40, in turn, includes motion compensation unit 44, motion estimation unit 42, intra-prediction unit 46, and partition unit 48. For video block reconstruction, video encoder 20 also includes inverse quantization unit 58, inverse transform unit 60, and summer 62. A deblocking filter may also be included to filter block boundaries to remove blockiness artifacts from reconstructed video. If desired, the deblocking filter would typically filter the output of summer 62. Additional filters (in loop or post loop) may also be used in addition to the deblocking filter. Such filters are not shown for brevity, but if desired, may filter the output of summer 50 (as an in-loop filter).

During the encoding process, video encoder 20 receives a video frame or slice to be coded. The frame or slice may be divided into multiple video blocks. Motion estimation unit 42 and motion compensation unit 44 perform inter-predictive coding of the received video block relative to one or more blocks in one or more reference frames to provide temporal prediction. Intra-prediction unit 46 may alternatively perform intra-predictive coding of the received video block relative to one or more neighboring blocks in the same frame or slice as the block to be coded to provide spatial prediction. Video encoder 20 may perform multiple coding passes, e.g., to select an appropriate coding mode for each block of video data.

Moreover, partition unit 48 may partition blocks of video data into sub-blocks, based on evaluation of previous partitioning schemes in previous coding passes. For example, partition unit 48 may initially partition a frame or slice into LCUs, and partition each of the LCUs into sub-CUs based on rate-distortion analysis (e.g., rate-distortion optimization). Mode select unit 40 may further produce a quadtree data structure indicative of partitioning of an LCU into sub-CUs. Leaf-node CUs of the quadtree may include one or more PUs and one or more TUs.

Mode select unit 40 may select one of the coding modes, intra or inter, e.g., based on error results, and provides the resulting intra- or inter-coded block to summer 50 to generate residual block data and to summer 62 to reconstruct the encoded block for use as a reference frame. Mode select unit 40 also provides syntax elements, such as motion vectors, intra-mode indicators, partition information, and other such syntax information, to entropy encoding unit 56.

Motion estimation unit 42 and motion compensation unit 44 may be highly integrated, but are illustrated separately for conceptual purposes. Motion estimation, performed by motion estimation unit 42, is the process of generating motion vectors, which estimate motion for video blocks. A motion vector, for example, may indicate the displacement of a PU of a video block within a current video frame or picture relative to a predictive block within a reference frame (or other coded unit) relative to the current block being coded within the current frame (or other coded unit). A predictive block is a block that is found to closely match the block to be coded, in terms of pixel difference, which may be determined by sum of absolute difference (SAD), sum of square difference (SSD), or other difference metrics. In some examples, video encoder 20 may calculate values for sub-integer pixel positions of reference pictures stored in reference frame memory 64. For example, video encoder 20 may interpolate values of one-quarter pixel positions, one-eighth pixel positions, or other fractional pixel positions of the reference picture. Therefore, motion estimation unit 42 may perform a motion search relative to the full pixel positions and fractional pixel positions and output a motion vector with fractional pixel precision.

Motion estimation unit 42 calculates a motion vector for a PU of a video block in an inter-coded slice by comparing the position of the PU to the position of a predictive block of a reference picture. The reference picture may be selected from a first reference picture list (List 0) or a second reference picture list (List 1), each of which identify one or more reference pictures stored in reference frame memory 64. Motion estimation unit 42 sends the calculated motion vector to entropy encoding unit 56 and motion compensation unit 44.

Motion compensation, performed by motion compensation unit 44, may involve fetching or generating the predictive block based on the motion vector determined by motion estimation unit 42. Again, motion estimation unit 42 and motion compensation unit 44 may be functionally integrated, in some examples. Upon receiving the motion vector for the PU of the current video block, motion compensation unit 44 may locate the predictive block to which the motion vector points in one of the reference picture lists. Summer 50 forms a residual video block by subtracting pixel values of the predictive block from the pixel values of the current video block being coded, forming pixel difference values, as discussed below. In general, motion estimation unit 42 performs motion estimation relative to luma components, and motion compensation unit 44 uses motion vectors calculated based on the luma components for both chroma components and luma components. Mode select unit 40 may also generate syntax elements associated with the video blocks and the video slice for use by video decoder 30 in decoding the video blocks of the video slice.

Intra-prediction unit 46 may intra-predict a current block, as an alternative to the inter-prediction performed by motion estimation unit 42 and motion compensation unit 44, as described above. In particular, intra-prediction unit 46 may determine an intra-prediction mode to use to encode a current block. In some examples, intra-prediction unit 46 may encode a current block using various intra-prediction modes, e.g., during separate encoding passes, and intra-prediction unit 46 (or mode select unit 40, in some examples) may select an appropriate intra-prediction mode to use from the tested modes.

For example, intra-prediction unit 46 may calculate rate-distortion values using a rate-distortion analysis for the various tested intra-prediction modes, and select the intra-prediction mode having the best rate-distortion characteristics among the tested modes. Rate-distortion analysis generally determines an amount of distortion (or error) between an encoded block and an original, unencoded block that was encoded to produce the encoded block, as well as a bitrate (that is, a number of bits) used to produce the encoded block. Intra-prediction unit 46 may calculate ratios from the distortions and rates for the various encoded blocks to determine which intra-prediction mode exhibits the best rate-distortion value for the block.

After selecting an intra-prediction mode for a block, intra-prediction unit 46 may provide information indicative of the selected intra-prediction mode for the block to entropy encoding unit 56. Entropy encoding unit 56 may encode the information indicating the selected intra-prediction mode. Video encoder 20 may include in the transmitted bitstream configuration data, which may include a plurality of intra-prediction mode index tables and a plurality of modified intra-prediction mode index tables (also referred to as codeword mapping tables), definitions of encoding contexts for various blocks, and indications of a most probable intra-prediction mode, an intra-prediction mode index table, and a modified intra-prediction mode index table to use for each of the contexts.

Video encoder 20 forms a residual video block by subtracting the prediction data from mode select unit 40 from the original video block being coded. Summer 50 represents the component or components that perform this subtraction operation. Transform processing unit 52 applies a transform, such as a discrete cosine transform (DCT) or a conceptually similar transform, to the residual block, producing a video block comprising residual transform coefficient values. Transform processing unit 52 may perform other transforms which are conceptually similar to DCT. Wavelet transforms, integer transforms, sub-band transforms or other types of transforms could also be used. In any case, transform processing unit 52 applies the transform to the residual block, producing a block of residual transform coefficients. The transform may convert the residual information from a pixel value domain to a transform domain, such as a frequency domain. Transform processing unit 52 may send the resulting transform coefficients to quantization unit 54. Quantization unit 54 quantizes the transform coefficients to further reduce bit rate. The quantization process may reduce the bit depth associated with some or all of the coefficients. The degree of quantization may be modified by adjusting a quantization parameter. In some examples, quantization unit 54 may then perform a scan of the matrix including the quantized transform coefficients. Alternatively, entropy encoding unit 56 may perform the scan.

Following quantization, entropy encoding unit 56 entropy codes the quantized transform coefficients. For example, entropy encoding unit 56 may perform context adaptive variable length coding (CAVLC), context adaptive binary arithmetic coding (CABAC), syntax-based context-adaptive binary arithmetic coding (SBAC), probability interval partitioning entropy (PIPE) coding or another entropy coding technique. In the case of context-based entropy coding, context may be based on neighboring blocks. Following the entropy coding by entropy encoding unit 56, the encoded bitstream may be transmitted to another device (e.g., video decoder 30) or archived for later transmission or retrieval.

Inverse quantization unit 58 and inverse transform unit 60 apply inverse quantization and inverse transformation, respectively, to reconstruct the residual block in the pixel domain, e.g., for later use as a reference block. Motion compensation unit 44 may calculate a reference block by adding the residual block to a predictive block of one of the frames of reference frame memory 64. Motion compensation unit 44 may also apply one or more interpolation filters to the reconstructed residual block to calculate sub-integer pixel values for use in motion estimation. Summer 62 adds the reconstructed residual block to the motion compensated prediction block produced by motion compensation unit 44 to produce a reconstructed video block for storage in reference frame memory 64. The reconstructed video block may be used by motion estimation unit 42 and motion compensation unit 44 as a reference block to inter-code a block in a subsequent video frame.

Video encoder 20 of FIG. 2 represents an example of a video encoder configured to determine a video sequence to be encoded, encode the video sequence, and encode one or more bits of a reserved bits syntax element for the encoded video sequence as one or more coding tool enable bits, wherein the one or more coding tool enable bits indicate whether one or more coding tools are enabled for use by the video encoder. For example, if a particular coding tool is enabled, then the encoded video sequence may be decoded using the particular coding tool. In some examples, the reserved bits syntax element is part of a profile_tier_level syntax structure. The profile_tier_level syntax structure includes a general_reserved_zero_16bits reserved bit syntax structure. At least some of the bits in the general_reserved_zero_16bits reserved bit syntax structure can be used as coding tool enable bits. As a result, the coding tool enable bits do not necessarily need to be signaled elsewhere in an SPS or VPS. Instead, the coding tool enable bits can be presented by using bits in the general_reserved_zero_16bits reserved bit syntax structure that otherwise might not be used, thereby supporting efficient signaling of video coding properties. The profile tier level syntax structure may be included in a video parameter set (VPS) that includes information applicable to a plurality of layers of the encoded video sequence. In other examples, the profile_tier_level syntax structure may be included in sequence parameter set (SPS) syntax information.

Video encoder 20 may encode the one or more coding tool enable bits to indicate one or more encoder-decoder (codec) properties. For example, the one or more coding tool enable bits may indicate, for the encoded video sequence, a bitstream for the encoded video sequence, or an elementary stream for the encoded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream. In an example where video encoder 20 encodes a flag that indicates whether tiles are enabled in the one or more coding tool enable bits, the one or more coding tool enable bits may further indicate if tiles are independently encodable. In another example, video encoder 20 encodes a flag that indicates whether tiles are independently encodable without directly encoding a flag that indicates whether tiles are enabled. In some examples, video encoder 20 encodes the one or more coding tool enable bits to indicate whether a bitstream for the encoded video sequence has a bit depth of 8 bits. Video encoder 20 may also encode the one or more bits include a general_no_weighted_prediction_flag flag and a general_no_tiles_flag flag as part of the reserved bits syntax element. All of the above described indications may be independent of each other.

Video encoder 20 may encode the one or more coding tool enable bits as part of a general_reserved_zero_16bits reserved bit syntax structure. In some examples, video encoder 20 encodes the one or more coding tool enable bits into a sequence parameter set (SPS). In other examples, video encoder 20 encodes the one or more coding tool enable bits as part of a video parameter set (VPS) that includes information applicable to a plurality of layers of the coded video sequence.

Through encoding the one or more coding tool enable bits as part of the reserved bit syntax structure for an encoded video sequence, video encoder 20 enables lightweight access to video properties of the encoded video sequence. Therefore, devices that use a transport protocol that can understand the profile_tier_level syntax structure may be able to access the encoded video properties.

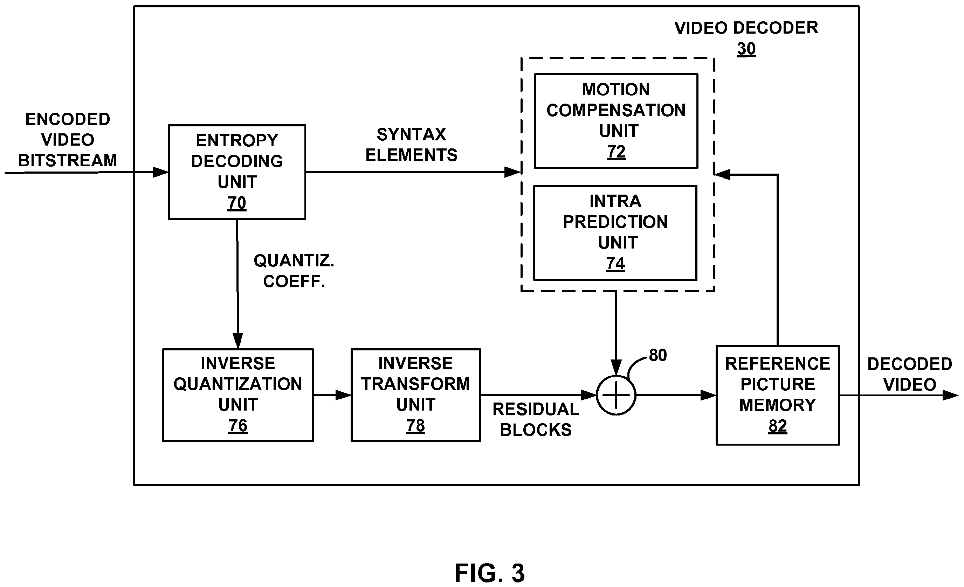

FIG. 3 is a block diagram illustrating an example of video decoder 30 that may implement techniques for indicating the coded properties at the sequence parameter set by reusing the profile, tier, and level syntax structure. In the example of FIG. 3, video decoder 30 includes an entropy decoding unit 70, motion compensation unit 72, intra prediction unit 74, inverse quantization unit 76, inverse transformation unit 78, reference frame memory 82 and summer 80. Video decoder 30 may, in some examples, perform a decoding pass generally reciprocal to the encoding pass described with respect to video encoder 20 (FIG. 2). Motion compensation unit 72 may generate prediction data based on motion vectors received from entropy decoding unit 70, while intra-prediction unit 74 may generate prediction data based on intra-prediction mode indicators received from entropy decoding unit 70.

During the decoding process, video decoder 30 receives an encoded video bitstream that represents video blocks of an encoded video slice and associated syntax elements from video encoder 20. Entropy decoding unit 70 of video decoder 30 entropy decodes the bitstream to generate quantized coefficients, motion vectors or intra-prediction mode indicators, and other syntax elements. Entropy decoding unit 70 forwards the motion vectors to and other syntax elements to motion compensation unit 72. Video decoder 30 may receive the syntax elements at the video slice level and/or the video block level.

When the video slice is coded as an intra-coded (I) slice, intra prediction unit 74 may generate prediction data for a video block of the current video slice based on a signaled intra prediction mode and data from previously decoded blocks of the current frame or picture. When the video frame is coded as an inter-coded (i.e., B, P or GPB) slice, motion compensation unit 72 produces predictive blocks for a video block of the current video slice based on the motion vectors and other syntax elements received from entropy decoding unit 70. The predictive blocks may be produced from one of the reference pictures within one of the reference picture lists. Video decoder 30 may construct the reference frame lists, List 0 and List 1, using default construction techniques based on reference pictures stored in reference frame memory 82. Motion compensation unit 72 determines prediction information for a video block of the current video slice by parsing the motion vectors and other syntax elements, and uses the prediction information to produce the predictive blocks for the current video block being decoded. For example, motion compensation unit 72 uses some of the received syntax elements to determine a prediction mode (e.g., intra- or inter-prediction) used to code the video blocks of the video slice, an inter-prediction slice type (e.g., B slice, P slice, or GPB slice), construction information for one or more of the reference picture lists for the slice, motion vectors for each inter-encoded video block of the slice, inter-prediction status for each inter-coded video block of the slice, and other information to decode the video blocks in the current video slice.

Motion compensation unit 72 may also perform interpolation based on interpolation filters. Motion compensation unit 72 may use interpolation filters as used by video encoder 20 during encoding of the video blocks to calculate interpolated values for sub-integer pixels of reference blocks. In this case, motion compensation unit 72 may determine the interpolation filters used by video encoder 20 from the received syntax elements and use the interpolation filters to produce predictive blocks.

Inverse quantization unit 76 inverse quantizes, i.e., de-quantizes, the quantized transform coefficients provided in the bitstream and decoded by entropy decoding unit 70. The inverse quantization process may include use of a quantization parameter QP_{Y} calculated by video decoder 30 for each video block in the video slice to determine a degree of quantization and, likewise, a degree of inverse quantization that should be applied.

Inverse transform unit 78 applies an inverse transform, e.g., an inverse DCT, an inverse integer transform, or a conceptually similar inverse transform process, to the transform coefficients in order to produce residual blocks in the pixel domain.

After motion compensation unit 72 generates the predictive block for the current video block based on the motion vectors and other syntax elements, video decoder 30 forms a decoded video block by summing the residual blocks from inverse transform unit 78 with the corresponding predictive blocks generated by motion compensation unit 72. Summer 80 represents the component or components that perform this summation operation. If desired, a deblocking filter may also be applied to filter the decoded blocks in order to remove blockiness artifacts. Other loop filters (either in the coding loop or after the coding loop) may also be used to smooth pixel transitions, or otherwise improve the video quality. The decoded video blocks in a given frame or picture are then stored in reference frame memory 82, which stores reference pictures used for subsequent motion compensation. Reference frame memory 82 also stores decoded video for later presentation on a display device, such as display device 32 of FIG. 1.

Video decoder 30 of FIG. 3 represents an example of a video decoder configured to receive a coded video sequence and decode one or more bits of a reserved bits syntax element for the coded video sequence as one or more coding tool enable bits, wherein the one or more coding tool enable bits indicate whether one or more coding tools are enabled for use by the video decoder. In some examples, the reserved bits syntax element is part of a profile_tier_level syntax structure. The profile_tier_level syntax structure may be included in a video parameter set (VPS) that includes information applicable to a plurality of layers of the encoded video sequence. In other examples, the profile_tier_level syntax structure may be included in a sequence parameter set (SPS) syntax information.

Video decoder 30 may decode the one or more coding tool enable bits to determine one or more encoder-decoder (codec) properties. For example, the one or more coding tool enable bits may indicate, for the encoded video sequence, a bitstream for the encoded video sequence, or an elementary stream for the encoded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream. In an example where video decoder 30 decodes a flag that indicates whether tiles are enabled in the one or more coding tool enable bits, the one or more coding tool enable bits may further indicate whether tiles are independently encodable. In another example, video decoder 30 decodes a flag that indicates whether tiles are independently encodable without directly decoding a flag that indicates whether tiles are enabled. In some examples, video decoder 30 decodes the one or more coding tool enable bits to indicate whether a bitstream for the encoded video sequence has a bit depth of 8 bits. Video decoder 30 may also decode a general_no_weighted_prediction_flag flag and a general_no_tiles_flag flag as part of the reserved bits syntax element. All of the above described indications may be independent of each other. Video decoder 30 may decode the video sequence based on the one or more coding tool enable bits. For example, video decoder 30 decodes the encoded video sequence using one or more coding tools indicated as enabled by the decoded one or more coding tool enable bits.

Video decoder 30 may decode the one or more coding tool enable bits as part of a general_reserved_zero_16bits reserved bit syntax structure. In some examples, video decoder 30 decodes the one or more coding tool enable bits from a sequence parameter set (SPS). In other examples, video decoder 30 decodes the one or more coding tool enable bits as part of a video parameter set (VPS) that includes information applicable to a plurality of layers of the coded video sequence.

Video decoder 30 may have lightweight access to video properties of the encoded video sequence through decoding the one or more coding tool enable bits as part of the reserved bit syntax structure. Therefore, devices that use a transport protocol that can understand the profile_tier_level syntax structure may be able to access the encoded video properties. For example, a video decoder 30 having lightweight access to video properties may be able to extract the one or more coding enable tool bits from the bitstream without performing coding, such as variable length coding, on the bitstream. In examples where the one or more coding enable tool bits are coded in the VPS, the one or more coding enable tool bits may be within the first four bytes of the bitstream. In examples where the one or more coding enable tool bits are coded in the SPS, the one or more coding enable tool bits may be within the first four bytes of a packet including a SPS NAL unit. The first four bytes may be fix length coded and may be relatively easier to parse than other bytes in the bitstream.

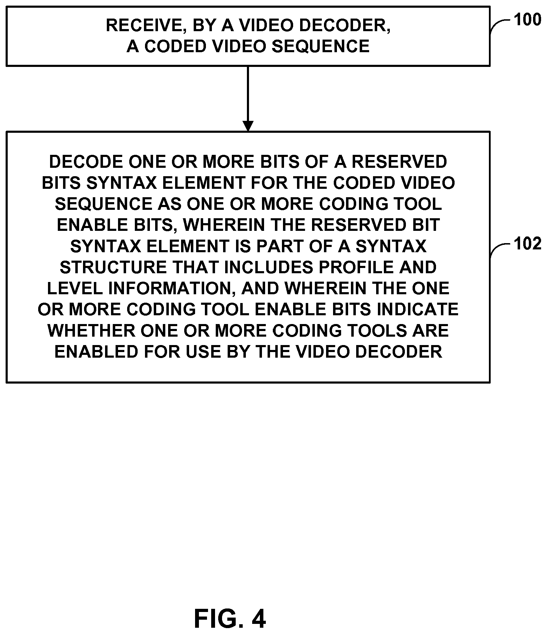

FIG. 4 is a flowchart illustrating an example method of decoding a video sequence, according to techniques described in this disclosure. The method of FIG. 4 may be performed by any video decoding device as described herein, such as video decoder 30 of FIGS. 1 and 3. The example method includes receiving, by a video decoder, such as video decoder 30, a coded video sequence (100). The video sequence may be, for example, received in a bitstream at video decoder 30.

The method may further include decoding one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video decoder (102). The syntax structure that includes profile and level information may be a profile_tier_level syntax structure. For example, the reserved bits syntax element has a plurality of bits that are consecutive with bits including profile and level information. That is, in a bitstream of the coded video sequence, bits of the reserved bits syntax element, including the one or more coding enable tool bits, are consecutive with one or more bits indicating profile and level information. In another example, the reserved bits syntax element has a plurality of bits that are consecutive with bits including profile, tier, and level information.

In some examples, the reserved bit syntax element is part of a syntax structure present in a bistream for the coded video sequence within several consecutive bytes of the profile and level information. For example, the one or more coding tool enable bits indicating the enablement of one or more coding tools may be located several bytes before the bits used to convey profile, tier, or level information. In another example, the one or more coding tool enable bits indicating the enablement of one or more coding tools may be located several bytes after the bits used to convey profile, tier, or level information.

In yet another example, the syntax structure that includes the reserved bit syntax element and the profile and level information may include only the one or more coding enable tool bits and profile, tier, and level information.

The method may further include decoding the coded video sequence using one or more coding tools that the one or more coding tool enable bits indicate are enabled for use by the video decoder.

In one example, the reserved bits syntax element is part of a profile_tier_level syntax structure. The profile_tier_level syntax structure may conform to the HEVC coding standard. The syntax element may be a general_reserved_zero_16bits syntax element. Table 1, below, provides an example of the profile, tier, and level syntax structure.

**TABLE 1**

| profile_tier_level(ProfilePresentFlag, MaxNumSubLayersMinus1 ) { | **Descriptor** |
|---|---|
| if(ProfilePresentFlag ) { | |
| **general**_**profile**_**space** | u(2) |
| **general_tier_flag** | u(1) |
| **general_profile_idc** | u(5) |
| for (i = 0; i < 32; i++) | |
| **general_profile**_**compatibility_flag[ i** ] | u(1) |
| **general**_**reserved_zero_16bits** | u(16) |
| } | |
| **general**_**level**_**idc** | u(8) |
| for (i = 0; i < MaxNumSubLayersMinus1; i++) { | |
| **sub**_**layer**_p**rofile**_**present**_**flag[**i] | u(1) |
| **sub**_**layer**_**level**_**present**_**flag[**i] | u(1) |
| if (ProfilePresentFlag && sub_layer_profile_present_flag[i]){ | |
| **sub_layer_profile_space[** i ] | u(2) |
| **sub_layer_tier_flag** | u(1) |
| **sub_layer_profile_idc[**i ] | u(5) |
| for(j = 0; j < 32; j++) | |
| **sub_layer_profile_compatibility_flag[**i][j] | u(1) |
| **sub_layer_reserved_zero_16bits[**i] | u(16) |
| } | |
| if ( sub_layer_level_present_flag[ i ]) | |
| **sub_layer_level_idc**[i ] | u(8) |
| } | |
| } | |

The syntax element **general_pro file_space** specifies the context for the interpretation of general_profile_idc and general_profile_compatibility_flag[i] for all values of i in the range of 0 to 31, inclusive. The value of general_profile_space shall be equal to 0 in bitstreams conforming to the HEVC Recommendation/International Standard. For example, the value of general_profile_space shall be equal to 0 in bitstreams conforming to techniques of this disclosure and HEVC WD 8. Other values for general_profile_space may be reserved for future use by ITU-T and ISO/IEC. In some examples, video decoder 30 shall ignore the coded video sequence if general_profile_space is not equal to 0.

The syntax element general_tier_flag specifies the tier context for the interpretation of general_level_idc as specified in Annex A of HEVC WD8.

The syntax element **general_profile_idc,** when general_profile_space is equal to 0, indicates the profile to which the coded video sequence conforms as specified in Annex A. The HEVC standard indicates that bitstreams shall not contain values of general_profile_idc other than those specified in Annex A. Other values of general_profile_idc are reserved for future use by ITU-T and/or ISO/IEC.

The syntax element **general_profile_compatibility_flag[**i] equal to 1, when general_profile_space is equal to 0, indicates that the coded video sequence conforms to the profile indicated by general_profile_idc equal to i as specified in Annex A. When general_profile_space is equal to 0, general_profile_compatibility_flag[ general_profile_idc] is equal to 1. The value of general_profile_compatibility_flag[i] is equal to 0 for any value of i that is not specified as an allowed value of general_profile_idc in Annex A.

The syntax element **general_reserved_zero_16bits** shall be equal to 0 in bitstreams conforming to this Recommendation/International Standard. Other values for general_reserved_zero_16bits are reserved for future use by ITU-T and ISO/IEC. Decoders shall ignore the value of general_reserved_zero_16bits.

Transport standards, including ISO base media file format, MPEG-2 systems, Dynamic Adaptive Streaming over HTTP (DASH), real-time transport protocol (RTP) may be designed to understand at least the first several bytes of the profile tier level syntax structure. However, other additional information in a sequence parameter set or video parameter set are less accessible. Thus, the current HEVC design does not support lightweight access to the video properties.

Bitstreams coded according to techniques of this disclosure do support lightweight access to video properties. In some examples, the one or more coding tool enable bits are presented in the general_reserved_zero_16bits to indicate one or more encoder-decoder (codec) properties. For example, video decoder 30 receives the coded property in a bitstream, and decodes the syntax element to determine the property. In some examples, less than all of the bits of the syntax element are used to indicate the codec properties.

According to techniques described herein, one of the bits in general_reserved_zero_16bits can be used to indicate one or more of the following codec properties: whether explicit weighted prediction (not default (1/2, 1/2) (1, 0) or (0, 1)) is enabled for the coded video sequence, bitstream, or elementary stream; whether tiles are enabled for the coded video sequence, bitstream, or elementary stream; Alternatively, or in addition, the bits in the general_reserved_zero_16bits may indicate whether tiles are independently decodable; whether wavefront processing is enabled for the coded video sequence, bitstream, or elementary stream; whether temporal motion vector prediction is enabled in the coded video sequence, bitstream or elementary stream; whether the scaling list data are present and used for the coded video sequence, bitstream or elementary stream; and whether the current bitstream is 8-bit or not. In some examples, all of the above indications can be independent to each other, or be used in combination with one another. In some examples, only one bit of the syntax element is used to convey the one or more codec properties. For example, a single bit of general_reserved_zero_16bits is used to signal whether the scaling list data is present. In other examples, two or more bits are used to convey the one or more codec properties.

Table 2, below, provides an example syntax for profile, tier, and level syntax elements.

**TABLE 2**

| profile_tier_level (ProfilePresentFlag, MaxNumSubLayersMinus1 ) { | **Descriptor** |
|---|---|
| if(ProfilePresentFlag ) { | |
| **general**_**profile**_**space** | u(2) |
| **general**_**tier_flag** | u(1) |
| **general_profile_idc** | u(5) |
| for (i = 0; i < 32; i++) | |
| **general**_**profile**_**compatibility_flag[** i ] | u(1) |
| **general_ no_weighted_prediction flag** | u(1) |
| **general**_ **no**_ **tiles**_**flag** | u(1) |
| **general_no_tile_depedency_flag** | u(1) |
| **general_notmvp_flag** | u(1) |
| **general_no_scaling_list_flag** | u(1) |
| **general_bit_depth_higher_8_flag** | u(1) |
| **general_reserved_zero_10bits** [Ed. (GJS): Adjust semantics accordingly.] | u(10) |
| } | |
| **general-level-idc** | u(8) |
| for (i = 0; i < MaxNumSubLayersMinus1; i++) { | |
| **sub_layer_profile_present_flag[i]** | u(1) |
| **sub_ layer_level_present_ flag**[ i ] | u(1) |
| if (ProfilePresentFlag && sub_layer_profile_present_flag[i]) { | |
| **sub_layer_profile_space[** i ] | u(2) |
| **sub**_ **layer**_ **tier**_**flag[** i **]** | u(1) |
| **sub_layer_profile_idc[**i **]** | u(5) |
| for(j = 0; j < 32; j++) | |
| **sub_layer**_**profile**_**compatibility_flag[**i][j] | u(1) |
| **general**_**no_weighted_prediction_flag** | u(1) |
| **general**_ **no**_ **tiles**_**flag** | u(1) |
| **general_no_tiledepedency_flag** | u(1) |
| **general_no_tmvp_flag** | u(1) |
| **general_no_scaling_list_flag** | u(1) |
| **general_ bit_depth_higher_ 8_flag** | u(1) |
| **general_reserved_zero_10bits** | u(10) |
| } | |
| if ( sub_layer_level_present_flag[ i ] ) | |
| **sub_layer_level_idc[**i ] | u(8) |
| } | |
| } | |

The syntax element **general_no_weighted_prediction_flag** equal to 1 indicates that, in the coded video sequence, no picture is coded with weighted prediction and syntax elements weighted_pred_flag and weighted_bipred_flag, in picture parameter sets (PPS) shall be equal to 0. The syntax element general_no_weighted_prediction_flag equal to 0 indicates that in the coded video sequence, weighted prediction may be used.

The syntax element **general_no_tiles_flag** equal to 1 indicates that one tile in each picture is used for each picture in the coded video sequence and syntax element tiles_enabled_flag, in picture parameter sets shall be equal to 0. When general_no_tiles_flag is equal to 0, the flag indicates that there may be more than one tile in the pictures.

The syntax element **general_no_tile_depedency_flag** equal to 1 indicates that when more than one tiles are used, there is no interaction between tiles and the syntax element loop_filter_across_tiles_enabled_flag in the picture parameter set shall be equal to 0. When general_no_tile_depedency_flag is equal to 0, the flag indicates that when more than one tiles are used, there might be interaction between the tiles.

When the syntax element general_no_tiles_flag is equal to 1, the syntax element general_no_tile_depedency**_**flag is reserved to be 0.

The syntax element **general_no_tmvp_flag** equal to 1 indicates that no temporal motion vector prediction is disabled for the whole coded video sequence and sps_temporal_mvp_enable_flag in the sequence parameter set (SPS) is equal to 0. The syntax element general_no_tmvp_flag equaling 0 indicates that no temporal motion vector prediction may be enabled.

The syntax element **general_no_scaling_list_flag** equal to 1 indicates that no scaling list is used for the scaling process for transform coefficients for any picture of the whole coded video sequence and the syntax element scaling_list_enable_flag shall be equal to 1. Setting the syntax element general_no_scaling_list_flag equal to 0 indicates that a scaling list may be used.

The syntax element **general_bit_depth_higher_8_flag** equal to 1 indicates that only bit depth equal to 8 is used for pictures of the whole coded video sequence, general_bit_depth_higher_8_flag equal to 0 indicates that higher (or even lower) bit depths may be used for the pictures in the coded video sequence.

One or more of the above described syntax elements, general_no_weighted_prediction_flag, general_no _tiles_flag, general_no_tile_depedency_flag, general_no_tmvp_flag, general_no_scaling_list_flag, and general_bit_depth_higher_8_flag, may be coded as part of one or more bits of a reserved bit syntax element. Video decoder 30 may decode the one or more bits of a reserved bit syntax element to determine the values of the flags for use in decoding the encoded video stream. Thus, the signaled codec property may indicate that, for the coded video sequence, a bitstream for the coded video sequence, or elementary stream for the coded video sequence, one or more of: whether explicit weighted prediction is enabled, whether tiles are enabled, whether a wavefront is enabled, whether temporal motion vector prediction is enabled, or whether scaling list data is present and used for the coded video sequence, bitstream, or elementary stream. In some examples, the signaled codec property further indicates whether, if enabled, any tiles are independently decodable.

In some examples, the profile_tier_level syntax structure is included in a video parameter set (VPS) that includes information applicable to a plurality of layers of the coded video sequence. In some examples, the one or more coding tool enable bits are not included in a sequence parameter set (SPS) syntax information and are included as part of a general_reserved_zero_16bits reserved bits syntax element. In some examples, the reserved bits syntax element is general_reserved_zero_16bits. In some examples, the one or more bits may include a general_no_weighted_prediction_flag flag and a general_no_tiles_flag flag as part of the reserved bits syntax element. In some examples, the one or more coding tool enable bits are not included as other syntax elements outside the syntax structure in a parameter set, including video parameter set (VPS) and sequence parameter set (SPS) syntax information.

Table 3, below, illustrates an alternative example for the profile_tier_level syntax elements. In this example, the flags in the sequence parameter set that indicate which tools are enabled or disabled may be removed from the current position, while added as part of the general_reserved_zero_16bits. Alternatively, only a selected one or more flags of the flags in the sequence parameter set are removed and included as part of the general_reserved_zero_16bits. Alternatively, those flags removed from the sequence parameter set, together with other flags, such as general_no_weighted_prediction_flag, general_no_tiles_flag may co-exist as part of the general_reserved_zero_16bits. For example, one or more flags that would have ordinarily been signaled elsewhere in the SPS or VPS may be added to the general_reserved_zero_16bits, and either maintain or remove them from where they would have been ordinarily signaled in the SPS or VPS.

This example of profile_tier_level includes the following syntax elements: scaling_list_enable_flag, amp_enabled_flag, sample_adaptive_offset_enabled_flag, sps_temporal_mvp_enable_flag, and pcm enabled flag.

**TABLE 3**

| profile_tier_level (ProfilePresentFlag, MaxNumSubLayersMinus1 ) { | **Descriptor** |
|---|---|
| if (ProfilePresentFlag ) { | |
| **general**_**profile**_**space** | u(2) |
| **general_tie_flag** | u(1) |
| **general_profile_idc** | u(5) |
| for (i = 0; i < 32; i++) | |
| **general_profile**_**compatibility_flag[** i ] | u(1) |
| **sealing_list_enable_flag** | u(1) |
| **amp_enabled_flag** | u(1) |
| **sample_adaptive_offset_enabled_flag** | u(1) |
| **sps_temporal_mvp_enable_flag** | u(1) |
| ... | |
| **general_reserved_zero_Nbits** [Ed. (GJS): Adjust semantics accordingly.] | u(N) |
| } | |
| **general_level_idc** | u(8) |
| for (i = 0; i < MaxNumSubLayersMinus1; i++) { | |
| **sub_layer_profile_present_flag**[i] | u(1) |
| **sub_layer_level_present_flag**[i] | u(1) |
| if (ProfilePresentFlag && sub_layer_profile_present_flag[i]) { | |
| **sub_layer_profile_space[** i ] | u(2) |
| **sub_layer_tier_flag**[ i ] | u(1) |
| **sub_layer_proflle_idc[**i ] | u(5) |
| for(j = 0; j < 32; j++) | |
| **sub_layer_proflle_compatibility_flag**[i][j] | u(1) |
| **pcm_enabled_flag** | u(1) |
| **scaling**_**list**_**enable**_**flag** | u(1) |
| **amp**_**enabled**_**flag** | u(1) |
| **sample_adaptive_offset_enabled_flag** | u(1) |
| **sps_temporal_mvp_enable_flag** | u(1) |
| ... | |
| **general_reserved_zero_Nbits** | u(N) |
| } | |
| if ( sub_layer_level_present_flag[ i ]) | |
| **sub_layer_level_idc**[i ] | u(8) |
| } | |
| } | |

Table 4, below, provides an example sequence parameter set raw byte sequence payload (RBSP) syntax. In this seq_parameter_set_rbsp() syntax example, several syntax elements have been removed from a similar example in HEVC WD 8. These include pcm enabled flag, scaling_list_enable_flag, amp_enabled_flag, sample_adaptive_offset_enabled_flag, and the sps_temporal_mvp_enable_flag. These flags may be removed from the RBSP syntax because they may be now presented in the general_reserved_zero_16bits reserved bits of the profile_tier_level syntax structure and there is no need to duplicate such information elsewhere in the bitsteam. These deleted syntax elements are included in Table 4 with a strikethrough to indicate they are not included in the seq_parameter_set_rbsp() in this example.

**TABLE 4**

| seq_parameter_set rbsp() { | **Descriptor** |
|---|---|
| **video_parameter_set_id** | u(4) |
| **sps_max_sub_layers_minus1** | u(3) |
| **sps_reserved_zero_bit** | u(1) |
| profile_and_level( 1, sps_max_sub_layers_minus1 ) | |
| **seq_parameter_set_id** | ue(v) |
| **chroma_format_idc** | ue(v) |
| if (chroma_format_idc = = 3) | |
| **separate_colour_plane_flag** | u(1) |
| **pic_width_in_luma_samples** | ue(v) |
| **pic_height_in_luma_samples** | ue(v) |
| **pi_ cropping**_**flag** | u(1) |
| if ( pic_cropping_flag) { | |
| **pic_crop_left_offset** | ue(v) |
| **pic_crop_right_offset** | ue(v) |
| **pic_crop_top_offset** | ue(v) |
| **pic_crop_bottom_offset** | ue(v) |
| } | |
| **bit_depth_luma_minus8** | ue(v) |
| **bit_depth_chroma_minus8** | ue(v) |
| if ( pcm_enabled_flag) { | |
| **pcm**_ **sample**_ **bit_depthluma_minus1** | u(4) |
| **pcm**_ **sample**_ **bit_depth**_ **chroma**_ **minus1** | u(4) |
| } | |
| **log2_max_pic_order-cnt_lsb-minus4** | ue(v) |
| for (i = 0; i <= sps_max_sub_layers_minusl; i++) { | |
| **sps_max_dec_pic_buffering[**i ] | ue(v) |
| **sps_max_num_reorder_pics[**i ] | ue(v) |
| **sps_max_latency_increase[**i ] | ue(v) |
| } | |
| **restricted_ref_pic_lists_flag** | u(1) |
| if (restricted_ref_ pic_lists_flag) | |
| **lists_modification_present_flag** | u(1) |
| **log2_min_coding_block_size_minus3** | ue(v) |
| **log2_diff_max_min_coding_block_size** | ue(v) |
| log2_**min**_ **transform_ block _size_ minus2** | ue(v) |
| **log2**_**diff_max_min_transform_block_size** | ue(v) |
| if ( pcm_enabled_flag) { | |
| **log2**_**min_pcm_coding**_**block_size_minus3** | ue(v) |
| **log2_diff_max_min_pcm_coding_block_size** | ue(v) |
| } | |
| **max_transform_hierarchy_depth_inter** | ue(v) |
| **max_transform_hierarchy_depth_intra** | ue(v) |
| if ( scaling_list_enable_flag) { | |
| **sps_scaling_list_data_present_flag** | u(1) |
| if ( sps_scaling_list_data_present_flag) | |
| scaling_list_data() | |
| } | |
| if (pcm _enabled_flag) | |
| **pcm_loop_filter_disable_flag** | u(1) |
| **sps_temporal_id_nesting_flag** | u(1) |
| **num_short_term_ref_pic_sets** | ue(v) |
| for (i = 0; i < num_short_term_ref_pic_sets; i++) | |
| short_term_ref_pic_set( i) | |
| **long_term_ref_pics_present_ flag** | u(1) |
| if ( long_term_ref_pics_present_flag) { | |
| **num_long_term_ref_pics_sps** | ue(v) |
| for (i = 0; i < num_long_term_ref_pics_sps; i++) { | |
| **It_ref_pic_poc_lsb_sps[** i ] | u(v) |
| **used_by_curr_pic_It_sps_flag[** i ] | u(1) |
| } | |
| } | |
| **vui_parameters_present_ flag** | u(1) |
| if (vui_parameters_present_flag) | |
| vui_parameters() | |
| **sps_extension_flag** | u(1) |
| if ( sps_extension_flag) | |
| while(more_rbsp_data( )) | |
| **sps_extension**_ **data_ flag** | u(1) |
| rbsp_trailing_bits() | |
| } | |

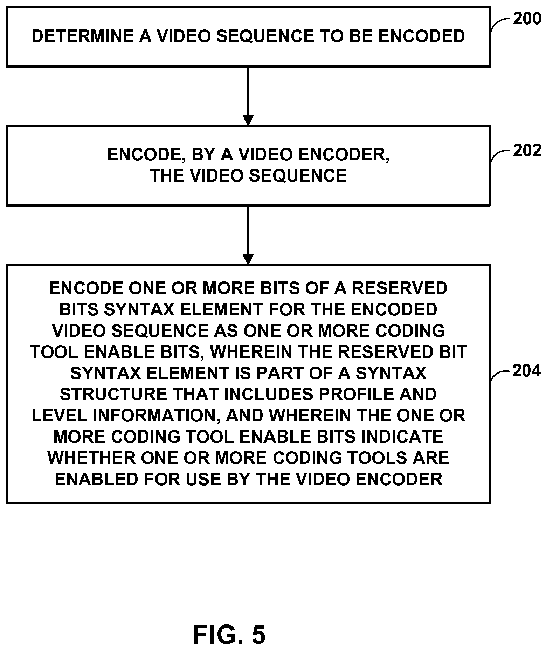

FIG. 5 is a flowchart illustrating an example method of encoding a video sequence, according to techniques described in this disclosure. The method of FIG. 5 may be performed by any video encoding device as described herein, such as video decoder 20 of FIGS. 1 and 2. The example method includes determining a video sequence to be encoded (200). Video encoder 20 may receive the video sequence in a bitstream from video source 18, for example.

The method may also include encoding, by a video encoder, the video sequence (202). For example, video encoder 20 may encode the video sequence using one or more coding tools. The method may further include encoding one or more bits of a reserved bits syntax element for the encoded video sequence as one or more coding tool enable bits, wherein the reserved bit syntax element is part of a syntax structure that includes profile and level information, and wherein the one or more coding tool enable bits indicate whether one or more coding tools are enabled for use by the video encoder (204). The syntax structure that includes profile and level information may be a profile_tier_level syntax structure. For example, the reserved bits syntax element has a plurality of bits that are consecutive with bits including profile and level information. That is, in a bitstream of the coded video sequence, bits of the reserved bits syntax element, including the one or more coding enable tool bits, are consecutive with one or more bits indicating profile and level information. In another example, the reserved bits syntax element has a plurality of bits that are consecutive with bits including profile, tier, and level information.

Video encoder 20 encodes the syntax element to signal the coded properties. In some examples, the one or more coding tool enable bits indicates one or more encoder-decoder (codec) properties. In some examples, encoding the video sequence further includes encoding the video sequence using a subset of the one or more coding tools. Encoding the one or more bits of the reserved bit syntax element may further include encoding the one or more coding tool enable bits such that the one or more coding tool enable bits indicate the subset of the one or more coding tools is enabled. Video encoder 20 would encode one or more coding tool enable bits associated with any of the one or more coding tools that video encoder 20 did not use to encode the video sequence to indicate that the one or more coding tools are disabled. The reserved bits syntax element may be set of bits reserved for future use in HEVC WD 8, general_reserved_zero_16bits.

The reserved bits syntax element may be part of a profile_tier_level syntax structure. The profile_tier_level syntax structure may in the SPS, or alternatively, in the VPS. For example, the syntax structure may be a profile_tier_level syntax structure conforming to the HEVC standard and the reserved bits syntax element may be a general_reserved_zero_16bits reserved bits syntax element of the profile_tier_level syntax structure.

The profile_tier_level syntax structure may be included in a video parameter set (VPS) that includes information applicable to a plurality of layers of the encoded video sequence. In an alternative example, video encoder 20 may include the one or more coding tool enable bits are in a sequence parameter set (SPS) syntax information. In other examples, the one or more coding tool enable bits are not included in a SPS syntax information but are included as part of a general_reserved_zero_16bits reserved bits syntax element. A SPS is required for each layer of the video data, resulting in multiple SPSs being coded and transmitted. In contrast, the VPS is sent only once for all layers of the video data. Thus, including the profile_tier_level syntax structure in the VPS instead of in the SPS reduces the overall number of bits sent. In other words, in one example of this disclosure, there is no need to include the profile_tier_level syntax structure in each SPS (for each layer of video data). Instead, a single profile_tier_level syntax structure in a single VPS may be provided. In one example, the profile_tier_level syntax structure is included in the VPS that includes information applicable to a plurality of layers of the coded video sequence. In some examples, the one or more coding tool enable bits are not included as other syntax elements outside the syntax structure in a parameter set, including video parameter set (VPS) and sequence parameter set (SPS) syntax information. That is, the one or more coding tool enable bits are not repeated outside the syntax structure.

The one or more coding tool enable bits may indicate, for the encoded video sequence, a bitstream for the encoded video sequence, or an elementary stream for the encoded video sequence, or an operation point of the coded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream. The one or more coding tool enable bits may further indicate whether, if tiles are enabled, any tiles are independently codable. In some examples, the one or more coding tool enable bits indicate whether a bitstream for the encoded video sequence has a bit depth of 8 bits.

The signaled codec property may indicate whether the bitstream is 8-bit. In other examples, the signaled codec property indicates whether no temporal motion vector prediction is enabled. In some examples, the general_reserved_zero_16bits syntax element is part of a profile_tier_level syntax structure.

In some examples, one or more flags in a sequence parameter set syntax information are not included in the sequence parameter set syntax information and are included as part of the general_reserved_zero_16bits syntax element. In another example, one or more flags in a sequence parameter set syntax information are not included in the video parameter set syntax information and are included as part of the general_reserved_zero_16bits syntax element. One or more flags that indicate which tools are enabled or disabled in the sequence parameter set syntax information may be included as part of the general_reserved_zero_16bits syntax element. In one example, the one or more flags, a general_no_weighted_prediction_flag flag, and a general_no_tiles_flag flag are included as part of the general_reserved_zero_16bits syntax element.

Thus, video encoder 20 may encode a video sequence such that some video properties may be accessed by devices using transport standards that are designed to understand the profile_tier_level syntax structure.

In the various examples described herein, any number of bits available in the general_reserved_zero_16bits reserved bits (for example, up to a total number of 16 reserved bits) may be used for flags for selected coding tools or other video properties. For example, if video encoder 20 uses eight coding tools that may be signaled with flags according to techniques of this disclosure, video encoder 20 may encode 8 bits of the profile_tier_level syntax structure. In other examples, the first n bits of the general_reserved_zero_16bits reserved bits may be used to indicate n flags, wherein n in an integer between 0 and 16, inclusive. In other examples, the n bits may not necessarily be the first n bits. Further, the n bits used for flags can be consecutive or not consecutive.

It is to be recognized that depending on the example, certain acts or events of any of the techniques described herein can be performed in a different sequence, may be added, merged, or left out altogether (e.g., not all described acts or events are necessary for the practice of the techniques). Moreover, in certain examples, acts or events may be performed concurrently, e.g., through multi-threaded processing, interrupt processing, or multiple processors, rather than sequentially.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

Various examples have been described. These and other examples are within the scope of the following claims.

Embodiments of the invention are described with reference to the following numbered clauses, with preferred features laid out in the dependent clauses.
1. A method of decoding video data, the method comprising:
   receiving, by a video decoder, a coded video sequence; and
   decoding one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video decoder in decoding the coded video sequence.
2. The method of clause 1, wherein the syntax structure is a profile_tier_level syntax structure conforming to a high efficiency video coding (HEVC) standard, and wherein the reserved bits syntax element is a general_reserved_zero_16bits reserved bits syntax element of the profile_tier_level syntax structure.
3. The method of clause 2, wherein the profile tier level syntax structure is included in a video parameter set (VPS) that includes information applicable to a plurality of layers of the coded video sequence.
4. The method of clause 1, wherein the one or more coding tool enable bits are not included as other syntax elements outside the syntax structure in a parameter set, including video parameter set (VPS) and sequence parameter set (SPS) syntax information.
5. The method of clause 1, wherein the one or more coding tool enable bits indicate, for the coded video sequence, a bitstream for the coded video sequence, or an elementary stream for, or an operation point of the coded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream.
6. The method of clause 5, wherein the one or more coding tool enable bits further indicate whether, if tiles are enabled, any tiles are independently decodable.
7. The method of clause 1, wherein the one or more coding tool enable bits indicate whether a bitstream of the coded video sequence has a bit depth of 8 bits.
8. The method of clause 1, wherein the one or more bits include a general_no_weighted_prediction_flag flag and a general_no_tiles_flag flag as part of the reserved bits syntax element.
9. The method of clause 1, wherein the one or more coding tool enable bits are not included in a video parameter set (VPS) syntax information and are included as part of a general_reserved_zero_16bits reserved bits syntax element of a profile_tier_level syntax structure.
10. The method of clause 1, further comprising:
   decoding the coded video sequence using one or more coding tools that the one or more coding tool enable bits indicate are enabled for use by the video decoder.
11. A method of encoding video data, the method comprising:
   determining a video sequence to be encoded;
   encoding, by a video encoder, the video sequence; and
   encoding one or more bits of a reserved bits syntax element for the encoded video sequence as one or more coding tool enable bits, wherein the reserved bit syntax element is part of a syntax structure that includes profile and level information, and wherein the one or more coding tool enable bits indicate whether one or more coding tools are enabled for use by the video encoder in encoding the video sequence.
12. The method of clause 11, wherein the syntax structure is a profile _tier_level syntax structure conforming to a high efficiency video coding (HEVC) standard, and wherein the reserved bits syntax element is a general_reserved_zero_16bits reserved bits syntax element of the profile_tier_level syntax structure.
13. The method of clause 12, wherein the profile_tier_level syntax structure is included in a video parameter set (VPS) that includes information applicable to a plurality of layers of the encoded video sequence.
14. The method of clause 11, wherein the one or more coding tool enable bits are not included as other syntax elements outside the syntax structure in a parameter set, including video parameter set (VPS) and sequence parameter set (SPS) syntax information.
15. The method of clause 11, wherein the one or more coding tool enable bits indicate, for the encoded video sequence, a bitstream for the encoded video sequence, or an elementary stream for the encoded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream.
16. The method of clause 15, wherein the one or more coding tool enable bits further indicate whether, if tiles are enabled, any tiles are independently encodable.
17. The method of clause 11, wherein the one or more coding tool enable bits indicate whether a bitstream for the encoded video sequence has a bit depth of 8 bits.
18. The method of clause 11, wherein the one or more bits include a general_no_weighted_prediction_flag flag and a general_no_tiles_flag flag as part of the reserved bits syntax element.
19. The method of clause 11, wherein the one or more coding tool enable bits are not included in a video parameter set (VPS) syntax information and are included as part of a general_reserved_zero_16bits reserved bits syntax element of a profile _tier_level syntax structure.
20. The method of clause 11, wherein encoding the video sequence further comprises encoding the video sequence using a subset of the one or more coding tools, and wherein encoding the one or more bits of the reserved bit syntax element comprises encoding the one or more coding tool enable bits such that the one or more coding tool enable bits indicate the subset of the one or more coding tools is enabled.
21. A device for coding video data, the device comprising a video coder configured to determine a video sequence to be coded, code the video sequence, and code one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video coder in coding the video sequence.
22. The device of clause 21, wherein the syntax structure is a profile_tier_level syntax structure conforming to a high efficiency video coding (HEVC) standard, and wherein the reserved bits syntax element is a general_reserved_zero_16bits reserved bits syntax element of the profile_tier_level syntax structure.
23. The device of clause 22, wherein the profile_tier_level syntax structure is included in a video parameter set (VPS) that includes information applicable to a plurality of layers of the coded video sequence.
24. The device of clause 21, wherein the one or more coding tool enable bits are not included as other syntax elements outside the syntax structure in a parameter set, including video parameter set (VPS) and sequence parameter set (SPS) syntax information.
25. The device of clause 21, wherein the one or more coding tool enable bits indicate, for the coded video sequence, a bitstream for the coded video sequence, or an elementary stream for the coded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream.
26. A computer-readable storage medium having stored thereon instructions that, when executed, cause a processor of a device for coding video data to:
   determine a video sequence to be coded;
   code the video sequence; and
   code one or more bits of a reserved bits syntax element for the coded video sequence as one or more coding tool enable bits, wherein the reserved bit syntax element is part of a syntax structure that includes profile and level information, and wherein the one or more coding tool enable bits indicate whether one or more coding tools are enabled for use by the video coder in coding the video sequence.
27. The computer-readable storage medium of clause 26, wherein the syntax structure is a profile_tier_level syntax structure conforming to a high efficiency video coding (HEVC) standard, and wherein the reserved bits syntax element is a general_reserved_zero_16bits reserved bits syntax element of the profile_tier_level syntax structure.
28. The computer-readable storage medium of clause 26, wherein the one or more coding tool enable bits are not included as other syntax elements outside the syntax structure in a parameter set, including video parameter set (VPS) and sequence parameter set (SPS) syntax information.
29. The computer-readable storage medium of clause 26, wherein the one or more coding tool enable bits indicate, for the coded video sequence, a bitstream for the coded video sequence, or an elementary stream for the coded video sequence, one or more of whether explicit weighted prediction is enabled, whether tiles are enabled, whether a wavefront is enabled, whether temporal motion vector prediction is enabled, or whether scaling list data is present and used for the coded video sequence, bitstream, or elementary stream.
30. The computer-readable storage medium of clause 26, wherein the one or more coding tool enable bits further indicate whether, if tiles are enabled, any tiles are independently codable.

## Claims

1. A method of decoding video data, the method comprising:
decoding, by a video decoder, a plurality of coding tool enable bits of a parameter set syntax structure for a coded video sequence, each of the coding tool enable bits corresponding to at least one coding tool of a plurality of coding tools such that each of the coding tool enable bits corresponds to one or more different coding tools of the plurality of coding tools, wherein the parameter set syntax structure further includes profile and level information for the coded video sequence, and wherein the plurality of coding tool enable bits indicate whether the corresponding coding tools are enabled for use by the video decoder in decoding the coded video sequence;
determining whether coding tool enable bits of the plurality of coding tool enable bits indicate that corresponding coding tools are enabled; and
decoding, by the video decoder, the coded video sequence using the one or more coding tools that the plurality of coding tool enable bits indicate are enabled, without using the coding tools that the plurality of coding tool enable bits indicate are not enabled.

2. The method of claim 1, wherein determining whether coding tool enable bits of the plurality of coding tool enable bits indicate that corresponding coding tools are enabled comprises:
determining whether coding tool enable bits of the plurality of coding tool enable bits indicates that a first coding tool corresponding to the first coding tool enable bit is enabled; and
determining that a second coding tool enable bit of the plurality of coding tool enable bits indicates that a second coding tool corresponding to the second coding tool enable bit is disabled.

3. The method of claim 1, wherein the parameter set syntax structure comprises a video parameter set (VPS) that includes information applicable to a plurality of layers of the coded video sequence, wherein decoding the plurality of coding tool enable bits comprises decoding a first profile_tier_level syntax structure including a first version of the plurality of coding tool enable bits for the VPS, the method further comprising decoding a second version of the plurality of coding tool enable bits for a sequence parameter set (SPS) that includes information applicable to an individual layer of the coded video sequence.

4. The method of claim 1, wherein the plurality of coding tool enable bits comprise a first number of coding tool enable bits that indicate whether corresponding tools of a second number of coding tools are enabled for the coded video sequence, a bitstream including the coded video sequence, an elementary stream including the coded video sequence, or an operation point of the coded video sequence, the second number of coding tools comprising one or more of explicit weighted prediction, tiles, wavefronts, temporal motion vector prediction, or scaling list data, wherein the first number is equal to the second number.

5. A method of encoding video data, the method comprising:
encoding, by a video encoder, a video sequence using a subset of a set of available coding tools without using coding tools of the set of available coding tools outside of the subset, the subset comprising enabled coding tools for the video sequence; and
encoding, by the video encoder, a plurality of coding tool enable bits of a parameter set syntax structure for the encoded video sequence, each of the coding tool enable bits corresponding to at least one of the available coding tools such that each of the coding tool enable bits corresponds to one or more different coding tools of the available coding tools, wherein the parameter set syntax structure further includes profile and level information, and wherein encoding the plurality of coding tool enable bits comprises:
encoding values for the coding tool enable bits corresponding to the subset of the available coding tools that indicate that the subset of the available coding tools are enabled; and
encoding values for the coding tool enable bits corresponding to the available coding tools outside of the subset that indicate that the coding tools outside of the subset are disabled.

6. The method of claim 5, wherein the subset of the set of available coding tools includes a first coding tool, and wherein the coding tools of the set of available coding tools outside of the subset includes a second coding tool,
wherein encoding values for the coding tool enable bits corresponding to the subset of the available coding tools comprises encoding a first coding tool enable bit of the plurality of coding tool enable bits to indicate that the first coding tool corresponding to the first coding tool enable bit is enabled; and
wherein encoding values for the coding tool enable bits corresponding to the available coding tools outside of the subset that indicate comprises encoding a second coding tool enable bit of the plurality of coding tool enable bits to indicate that the second coding tool corresponding to the second coding tool enable bit is disabled.

7. The method of claim 1 or claim 5, wherein the parameter set syntax structure includes a profile_tier_level syntax structure conforming to a high efficiency video coding (HEVC) standard, the profile_tier_level syntax structure including the plurality of coding tool enable bits; and/or wherein the plurality of coding tool enable bits are included in a profile tier level syntax structure of the parameter set syntax structure.

8. The method of claim 5, wherein the parameter set syntax structure comprises a video parameter set (VPS) that includes information applicable to a plurality of layers of the coded video sequence, wherein encoding the plurality of coding tool enable bits comprises encoding a first profile_tier_level syntax structure including a first version of the plurality of coding tool enable bits for the VPS, the method further comprising encoding a second profile_tier_level syntax structure including a second version of the plurality of coding tool enable bits for a sequence parameter set (SPS) that includes information applicable to an individual layer of the coded video sequence.

9. The method of claim 5, wherein the plurality of coding tool enable bits comprise a first number of coding tool enable bits, wherein the available coding tools comprise a second number of available coding tools, the first number of coding tool bits indicating that the enabled coding tools are enabled and that the coding tools outside the subset are not enabled for the encoded video sequence, a bitstream including the encoded video sequence, an elementary stream of the encoded video sequence, or an operation point of the coded video sequence, the available coding tools comprising one or more of explicit weighted prediction, tiles, wavefronts, temporal motion vector prediction, or scaling list data, wherein the first number is equal to the second number.

10. The method of claim 4 or claim 9, wherein when at least one of the plurality of coding tool enable bits indicates that tiles are enabled, the plurality of coding tool enable bits further indicate whether any tiles of the coded video sequence are independently decodable.

11. The method of claim 1, wherein the plurality of coding tool enable bits indicate whether a bitstream for the encoded video sequence has a bit depth of 8 bits, or the method of claim 5, wherein the plurality of coding tool enable bits indicate whether a bitstream for the encoded video sequence has a bit depth of 8 bits.

12. The method of claim 1 or claim 5, wherein the plurality of coding tool enable bits include general_no_weighted_prediction_flag flag and a general_no_tiles_flag flag as part of the reserved bits syntax element.

13. The method of claim 1 or claim 5, wherein the plurality of coding tool enable bits are separate from a profile indicator and a level indicator of the profile and level information.

14. The method of claim 1 or claim 5, wherein the plurality of coding tool enable bits immediately follow thirty-two general profile compatibility flag bits of the syntax structure; or, wherein the plurality of coding tool enable bits are immediately followed by a set of general reserved zero bits of the syntax structure.

15. A device for coding video data, the device comprising:
a memory configured to store video data comprising a coded video sequence; and
a video coder configured to:
code a plurality of coding tool enable bits of a parameter set syntax structure for the coded video sequence, each of the coding tool enable bits corresponding to at least one coding tool of a plurality of coding tools such that each of the coding tool enable bits corresponds to different coding tools of the plurality of coding tools, wherein the syntax structure further includes profile and level information for the coded video sequence, and wherein the plurality of coding tool enable bits indicate whether the corresponding coding tools are enabled for use by the video coder in coding the video sequence;
determine whether coding tool enable bits of the plurality of coding tool enable bits indicate that a corresponding coding tools are enabled;
and
code the coded video sequence using the one or more coding tools that the plurality of coding tool enable bits indicate are enabled, without using the coding tools that the plurality of coding tool enable bits indicate are not enabled.

16. A non-transitory computer-readable storage medium having stored thereon instructions that, when executed, cause a processor of a device for coding video data including a coded video sequence to perform the method of any of claims 1-14.
